(19) Europäisches Patentamt
European Patent Office
Office européen des brevets

(11) **EP 2 123 613 A1**

(12) **EUROPÄISCHE PATENTANMELDUNG**

(43) Veröffentlichungstag:
**25.11.2009 Patentblatt 2009/48**

(51) Int Cl.:
***C04B 11/26*** *(2006.01)*

(21) Anmeldenummer: 08008733.1

(22) Anmeldetag: **09.05.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Claudius Peters Technologies GmbH**
**21614 Buxtehude (DE)**

(72) Erfinder:
• **Göcke, Volker**
**21702 Ahlerstedt (DE)**
• **Schuldt, Thomas**
**20149 Hamburg (DE)**

(74) Vertreter: **Riesenberg, Axel**
**Glawe - Delfs - Moll**
**Patent- und Rechtsanwälte**
**Rothenbaumchaussee 58**
**20148 Hamburg (DE)**

(54) **Verfahren und Anlage zur Kalzinierung von Phosphorgips**

(57) Die Erfindung betrifft ein Verfahren zum Kalzinieren von Phosphorgips oder anderen feuchten synthetischen Gipsen umfassend zwei Schritte, ein Kalzinieren des Guts in einer Kalziniermühle (3) und ein Nachkalzinieren des heißen Guts in einem Nachreaktor (6). Erfindungsgemäß ist vorgesehen, dass in dem Nachreaktor (6) ein Homogenisieren des Guts erfolgt. Vorzugsweise geschieht dies ohne Zuführung von Fremdenergie (mit Ausnahme von Systemabgas). Die Erfindung erreicht bei dem Kalzinieren in der Kalziniermühle (3) eine grobkristalline Kalzinierung, die eine mechanische Schwächung der Partikel des Guts bewirkt und damit eine Desagglomeration des feuchten Gipses bei vollständiger Kalzinierung in dem Nachreaktor ermöglicht.

Fig. 1

EP 2 123 613 A1

**Beschreibung**

Die Erfindung betrifft ein Verfahren zum Kalzinieren von Phosphorgips oder anderen feuchten synthetischen Gipsen umfassend zwei Schritte, ein Kalzinieren des Guts in einer Kalziniermühle und ein Nachkalzinieren des heißen Guts in einem Nachreaktor. Eine Anlage zur Durchführung des Verfahrens ist ebenfalls Gegenstand der Erfindung.

Zum Kalzinieren von z.B. Gips wird das Rohmaterial zerkleinert und in einem Reaktor gebrannt. Als Rohmaterial wird außer bergmännisch gewonnenem Naturgips im zunehmenden Maße sogenannter Recycling-Gips verwendet. Letzter fällt in großen Mengen bei der Rauchgasentschwefelung und bei der Säureherstellung, insbesondere von Phosphorsäure an. Gerade bei letztgenanntem tritt jedoch das Problem auf, dass er eine sehr hohe Feuchtigkeit aufweist. Das Angebot an Phosphorgips (oder anderen feuchten Gipsen) ist aber sehr groß, so dass ein erheblicher Bedarf an seiner Weiterverarbeitung, insbesondere zu Gipskartonplatten besteht.

Im Stand der Technik sind verschiedene Methoden zur Verarbeitung bekannt geworden. Eine erste besteht darin, den Feuchtegehalt durch Trocknung des Phosphorgipses zu reduzieren. Dies bietet den Vorteil, dass nach der Trocknung der Gips mit herkömmlichen Verfahren für Rauchgasentschwefelungsanlagen-Gips weiterverarbeitet werden kann. Dem steht als Nachteil gegenüber, dass zum Trocknen ein hoher Energieaufwand erforderlich ist. Das Trocknungsverfahren ist damit im Betrieb sehr teuer und für Phosphorgips letztlich unwirtschaftlich.

Es ist auch versucht worden, die bekannten Verfahren für Rauchgasentschwefelungsanlagen-Gips ohne Trocknung des feuchten Phosphorgipses anzuwenden. Es hat sich aber gezeigt, dass die so hergestellten Gipskartonplatten zu feucht sind und eine zu geringe Biegefestigkeit aufweisen. Diese Methode ist damit allenfalls zur Herstellung von Stuckgips brauchbar, nicht aber für Gipskartonplatten.

Schließlich wird dem feuchten Phosphorgips Naturgips zugemischt. Der hierzu erforderliche Anteil an Naturgips ist erheblich, und muss häufig bis zu 70 % betragen. Da das Aufkommen an Naturgips viel geringer ist als das an Phosphorgips, ist diese Methode teuer und nicht zur Lösung der Verarbeitung der großen Mengen an Phosphorgips geeignet.

Es stellt sich die Aufgabe, ein verbessertes Verfahren und eine entsprechende Anlage zur Verarbeitung von Phosphorgips, insbesondere zur Herstellung von Gipskartonplatten anzugeben. Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Kalzinieren von Phosphorgips oder anderen feuchten synthetischen Gipsen als zu verarbeitendes Gut umfassend ein Zuführen des Guts, ein Kalzinieren des Guts in einer Kalziniermühle und ein Nachkalzinieren des heißen Guts in einem Nachreaktor ist erfindungsgemäß vorgesehen, dass in dem Nachreaktor ein Homogenisieren des Guts erfolgt.

Die Erfindung betrifft weiterhin eine Anlage sowie einer Nachrüstreaktor zur Durchführung der genannten Verfahren: zum einen eine Kalzinieranlage umfassend eine Kalziniermühle und einen, in Prozesslaufrichtung dahinter liegenden Nachreaktor, wobei der Nachreaktor eine Homogenisiereinrichtung für den Gips aufweist; und zum anderen einen Nachrüstreaktor für Kalzinieranlagen zum Verarbeiten von Phosphorgips oder anderen feuchten synthetischen Gipsen mit einer Zuführeinrichtung für zumindest teilkalziniertes heißes Gut, einem Reaktionsraum und einer Abfuhreinrichtung für das vollkalzinierte Gut, wobei der Nachrüstreaktor eine Homogenisiereinrichtung für das Gut aufweist.

Kern der Erfindung ist der Gedanke, durch die Trennung eine gezielte Teilentkoppelung von Kalzinieren (wobei die erreichte Feinheit des Guts belanglos ist) und Zerkleinerung (so dass in dem Nachreaktor die Zielfeinheit erreicht wird) zu erreichen. Dabei erfolgt in dem Nachreaktor eine Nachkalzinierung, und zwar vorzugsweise ohne Eintrag von Fremdenergie, um so zu einer qualitativ hochwertigen Kalzinierung auch bei vorgeschalteter Flash-Kalzinierung zu gelangen. Die Verweilzeit in dem Nachreaktor nutzt die Erfindung dazu, eine weitgehende Zerkleinerung des feuchten Gipses zu erreichen.

Die Erfindung beruht auf der Erkenntnis, dass im Gegensatz zu nicht kalziniertem Gips der kalzinierte Gips eine wesentlich geringere Festigkeit seiner Kornpartikel aufweist. Die Erfindung nutzt dies, indem sie in der vorgeschalteten Kalziniermühle eine grobkristalline Kalzinierung durchführt. Phosphorgips und andere gleichartige synthetische Gipse zeichnen sich dadurch aus, dass die Kristalle eine längliche Form aufweisen und verhältnismäßig groß sind. Im kalzinierten Zustand reichen dann leichte mechanische Einwirkungen zur Zerkleinerung aus. Somit weisen die Kornpartikel im Nachreaktor bereits Spannungsrisse auf, die durch die starke thermische Beanspruchung durch Temperaturschwankungen (in der Kalziniermühle und beim Übergang in den Nachreaktor) entstehen. Verstärkt wird dies noch durch rasche Wasserdampfentwicklung innerhalb der Kornpartikel bei starker Volumenzunahme. Die Erfindung macht sich diese Spannungsrisse als eine Art "Sollbruchstellen" zu Nutze, um so mit der Nachzerkleinerung sehr feine Kornpartikel zu erhalten ("Homogenisieren"). Durch die parallele Durchführung mit der Nachkalzination ergibt sich der kombinatorische Vorteil, dass dadurch nicht nur die Feinheit gesteigert wird, sondern gleichzeitig auch eine Oberflächenvergrößerung erreicht wird, welche den Zugang von Wärme und Wasserdampf erleichtert, so dass der chemische Prozess der Nachkalzination besser und schneller ablaufen kann. Im Ergebnis tritt der überraschende Effekt ein, dass damit auch sehr feuchter Gips, wie Phosphorgips, ohne vorherige Trocknung mit geringem Zeit- und Energieaufwand nutzbar gemacht werden kann.

Zweckmäßigerweise sind dazu Turbomischer als Homogenisatoren in dem Nachreaktor angeordnet. Insgesamt sind es drei Schritte, auf die in Kombination die Erfindung beruht. Zum einen erfolgt in der Kalziniermühle eine Kalzination, die nicht vollständig ist und bei der die erreichte Feinheit keine Rolle spielt. In einem zweiten Schritt erfolgt ein Nachkalzinieren in dem Nachreaktor. Dies führt zu einer Vergleichmäßigung des Produkts, da eine Teilkalzinierung, d. h. unvollständige Umwandlung von Dihydrat zu Halbhydrat, im Nachreaktor vervollständigt wird, und dabei zugleich parasitär in der Kalziniermühle entstandenes Anhydrit (AIII) zu Halbhydrat rückgeführt wird. Bei diesem Schritt kann eine längere Verweilzeit im Interesse einer hohen Produktqualität gewählt werden. Da das Gut durch die vorherige Prozessstufe und das Nachkalzinieren, wie erläutert, stark beansprucht ist, macht sich die Erfindung dies und die vergleichsweise lange Verweilzeit zu Nutze, um das Gut fein zu zerkleinern. Hierbei können Zielfeinheiten erreicht werden, die deutlich über denen einer Durchlaufmühle liegen. Der für die Weiterverarbeitung, insbesondere zu Gipskartonplatten, bedeutende Blaine-Wert kann damit deutlich gesteigert werden. Überraschenderweise hat sich gezeigt, dass sich hierbei günstige Kristallpartikelformen ergeben, die zu einer hohen Festigkeit der mit dem Gut hergestellten Gipskartonplatten führen. Durch die Interaktion von wärmepassiver Nachkalzinierung und Zerkleinern wird somit der erwünschte Effekt erzielt, auch feuchten Phosphorgips (oder ähnliche Gipsarten) zu Gipskartonplatten verarbeiten zu können.

Dem Nachreaktor braucht hierbei keine Fremdenergie zugeführt zu werden. Er kann wärmepassiv ausgeführt sein. Dies bedeutet in Verbindung mit dem vernachlässigbaren Energieaufwand für das Homogenisieren, dass dank der erfindungsgemäßen Interaktion von Nachkalzinieren und Zerkleinern auf sehr energiesparende Weise Phosphorgips oder andere feuchte Gipsarten zur Verwendung als Stuck-/Putzgips oder zur Verarbeitung für Gipskartonplatten aufbereitet werden kann.

Das Ergebnis der Nachbehandlung lässt sich weiter verbessern, wenn dem Gut im Nachreaktor Wärmeenergie in Form von Systemabgasen zugeführt wird. Hierbei wird vorzugsweise Abwärme der vorgeschalteten Kalziniermühle oder eines nachgeschalteten Kühlers verwendet. Bei Bedarf kann feuchtes Abgas zugeführt werden, um den Gehalt an Wasserdampf bei der Nachkalzination zu erhöhen.

Nachfolgend seine einige verwendete Begriffe erläutert:

Unter Homogenisieren wird ein Behandeln mit einer schnelldrehenden Mischeinrichtung, wie einen Rotor/Stator-Homogenisator oder Turbomischer verstanden. Sie ist so ausgelegt, dass die charakteristischen länglichen Kristalle in Bruchstücke zerteilt werden.

Wärmepassiv im Sinne dieser Erfindung bedeutet, dass im Betrieb keine Fremdenergie zugeführt werden muss, sondern lediglich Wärmeenergie, die in anderen Prozessstufen als Verlustenergie entsteht, zugeführt wird. Insbesondere zeichnet sich ein wärmepassives Bauteil also durch Nichtvorhandensein von Heizeinrichtungen für Prozesswärme aus.

Systemabgas ist solches Gas, das in anderen Prozessstufen der Kalzinieranlage als Abgas anfällt. Insbesondere fällt hierunter Abgas der Kalziniermühle und eines Kühlers.

Vorzugsweise werden als Einrichtung zum Homogenisieren Turbomischer benutzt. Sie bieten den Vorteil eines vergleichsweise einfachen Aufbaus und einer guten Wirkung über einen großen Drehzahlbereich. Des Weiteren sind sie nur wenig anfällig in Bezug auf Verstopfung und können somit ohne Risiko ab- und wieder angeschaltet werden.

Das Homogenisieren braucht nicht unbedingt im Dauerbetrieb durchgeführt werden. Es hat sich gezeigt, dass es in vielen Fällen genügt, eine getaktete Homogenisierung durchzuführen. Damit kann durch Zu- und Abschalten der Homogenisiereinrichtung oder durch Drehzahländerung die Feinheit des Produkts bestimmt werden. Dies ermöglicht auch eine unabhängige Einstellung von Verweilzeit zur Nachkalzinierung und der gewünschten Feinheit durch das Homogenisieren.

Vorzugsweise wird das Homogenisieren derart durchgeführt, dass ein Blaine-Wert des Produkts verdoppelt wird. Weist beispielsweise der Phosphorgips nach der Kalzinierung in der Kalziniermühle einen Blaine-Wert im Bereich 2000 bis 4500 cm2/g auf, so wird er durch das Homogenisieren auf Werte von über 7000 cm2/g erhöht. Entsprechend wird auch der BET-Wert durch das Homogenisieren erhöht.

Das zu kalzinierende Gut wird in der Kalziniermühle auf eine Temperatur von mindestens 150°C, vorzugsweise zwischen 150°C und 160°C, erhitzt. Bei dieser Temperatur wird der Kalzinierungsprozess sicher in Gang gesetzt wird und das Gut hat nach dem Verlassen der Kalziniermühle und bei der Zufuhr in den Nachreaktor noch eine Temperatur von in der Regel 100°C oder mehr. Damit wird eine Nachkalzinierung im Nachreaktor ohne Fremdenergiezufuhr erreicht. Außerdem kann eine Energieeinsparung erreicht werden, da herkömmlicherweise Temperaturen von 170°C und mehr erforderlich sind.

Es sei noch angemerkt, dass die Erfindung mit der Nachkalzination in dem Nachreaktor außerdem eine Vergleichmäßigung erreicht. Damit erhöht sich nicht nur die Qualität des kalzinierten Guts, sondern es können auch Zulaufschwankungen beim Zuführen des Rohprodukts ausgeglichen werden. Schwankungen, insbesondere solche in Bezug auf die Feuchtigkeit des zugeführten Guts, schlagen also nicht mehr negativ auf die Produktqualität durch.

Der Nachreaktor sorgt vorzugsweise neben der Nachkalzinierung auch für eine Durchmischung des Gutes. Dazu ist der Nachreaktor mit mindestens einer Fluidisiereinrichtung ausgestattet. Dadurch kann ein Anbakken bzw. eine Ausbildung toter Zonen im Reaktor verhindert werden und es kommt zu einer intensiven Durchmischung. Als Fluidisiergas kann ebenfalls das Abgas der Kalziniermühle dienen. Es ist aber auch möglich, Umgebungsluft mit dem Abgas zu vermischen oder der Fluidisiereinrichtung getrennt von dem Abgas zuzuführen.

Die Erfindung bezieht sich auch auf eine Anlage zur Durchführung des soeben beschriebenen Verfahrens. Die Anlage ist zum Verarbeiten von Phosphorgips oder anderen feuchten synthetischen Gipsen ausgebildet ist, und umfasst eine Kalziniermühle und einen in Prozesslaufrichtung dahinter liegenden gesonderten Nachreaktor, wobei erfindungsgemäß der Nachreaktor eine Homogenisiereinrichtung für den Gips aufweist. Der Nachreaktor weist vorzugsweise Anschlüsse zur Speisung mit Systemabgas auf, wobei zur Prozessführung eine Steuereinrichtung vorgesehen ist. Zur näheren Erläuterung dieser Anlage wird auf vorstehende Beschreibung verwiesen.

Ein Nachrüstreaktor für Kalzinieranlagen zur Durchführung dieses Verfahrens ist ebenfalls Gegenstand dieser Erfindung. Der Nachrüstreaktor umfasst eine Zufuhreinrichtung für zumindest teilkalziniertes heißes Gut, einen Reaktionsraum und eine Abfuhreinrichtung für das vollkalzinierte Gut, wobei erfindungsgemäß der Nachrüstreaktor eine Homogenisiereinrichtung für das Gut aufweist. Zur Erläuterung wird auf obige Ausführungen zum Verfahren verwiesen.

Die Erfindung wird nachfolgend näher erläutert unter Bezugnahme auf die beigefügte Zeichnung, in der vorteilhafte Ausführungsbeispiele dargestellt sind. Es zeigen:

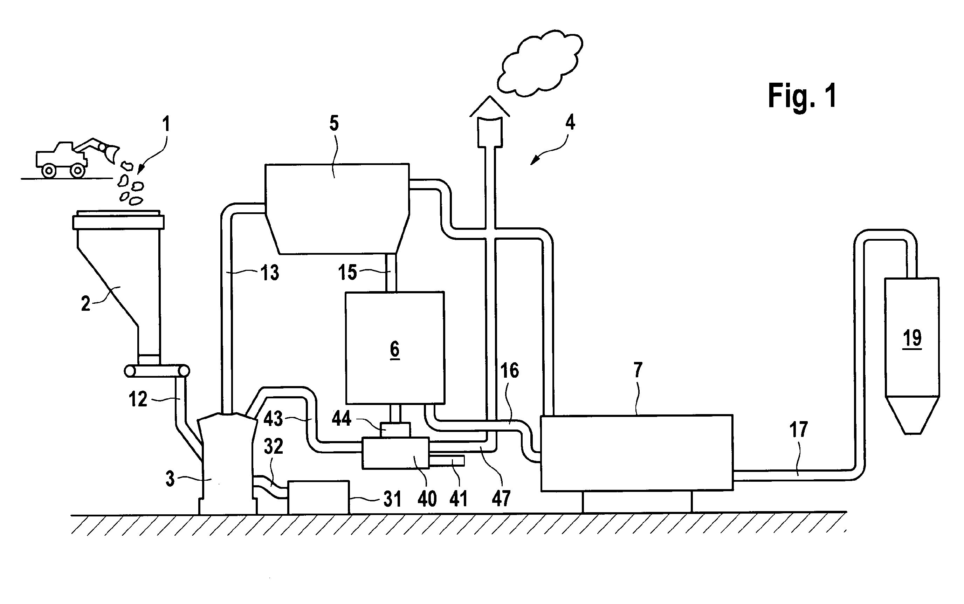

Fig. 1     eine schematische Übersichtsdarstellung eines Ausführungsbeispiels einer Kalzinieranlage; und

Fig. 2     eine Schnittansicht eines Nachreaktors der Kalzinieranlage gemäß Fig. 1.

Die Erfindung sei anhand eines Ausführungsbeispiels für eine Anlage zum Kalzinieren von Gips erläutert. Rohmaterial für das zu kalzinierende Gut wird an einer Aufgabestelle 1 in die Kalzinieranlage eingebracht. Bei dem Rohmaterial kann es sich insbesondere um Phosphorgips handeln, wie er bei der Herstellung von Phosphorsäure anfällt oder um anderen feuchten synthetischen Gips. Unter feucht wird hierbei verstanden, dass der dem Verfahren zugeführte Gips einen Wasserwert von mindestens 1,0 aufweist. Das Anwendungsgebiet der Erfindung ist nicht zwingend auf solchen Gips beschränkt, sondern erstreckt sich auch auf andere Arten von synthetischem oder recyceltem Gips. Von der Aufgabestelle 1 gelangt das Phosphorgips-Rohmaterial an ein oberes Ende eines Speichersilos 2. Dieser ist erhöht angeordnet und befindet sich oberhalb einer Kalziniermühle 3.

Der Phosphorgips wird über eine Leitung 12 in die Kalziniermühle 3 eingebracht wird. In der Kalziniermühle 3 wird der Gips zerkleinert und kalziniert. Die Kalzinierung erfolgt als Flash-Kalzinierung. Dies bedeutet eine kurze Verweilzeit von unter 10 Sekunden bei einer Temperatur von 150°C bis 160°C, also oberhalb der eigentlichen Kalziniertemperatur. Dazu ist an die Kalziniermühle 3 ein Heißgasgenerator 31 über eine Zuleitung 32 angeschlossen.

Nach erfolgter Flash-Kalzinierung bei einer Verweildauer von nur 3 Sekunden (die erfindungsgemäß nicht vollständig zu sein braucht) wird der über 100°C-heiße Gips über eine Steigleitung 13 von der Kalziniermühle 3 zu einer Filteranlage 5 geführt. Von dort führt eine Leitung 15 an einen erfindungsgemäßen Nachreaktor 6. Dort verweilt es für 20 Minuten, und wird in dieser Zeit ohne Fremdenergiezufuhr nachkalziniert und homogenisiert. Die Funktionsweise des ungekühlten Nachreaktors 6 wird noch näher beschrieben. Von dem Nachreaktor 6 wird der immer noch heiße Gips über eine Leitung 16 an ein Aufgabeende eines Drehrohrkühlers 7 transportiert. Nach Durchlaufen des Kühlers 7 wird der gekühlte und der nun vollständig kalzinierte Gips über eine Verteilerleitung 17 in ein Lagersilo 19 geleitet. Aus diesem kann nach Bedarf entnommen werden. Zur Abführung von Abwärme ist eine Anlage für Systemabgas 4 vorgesehen. An sie ist die Kalziniermühle 3, der Filter 5 und der Kühler 7 angeschlossen.

Weiter ist ein Mischer 40 an das Systemabgas 4 angeschlossen. Über eine Leitung 43 wird heißes Abgas mit einer Temperatur von über 150°C von der Kalziniermühle 3 und über eine Leitung 47 von dem Kühler 7 zugeführt. Eine Leitung 41 ist für Zuführung von Umgebungsluft vorgesehen, um so nach Bedarf Umgebungsluft zur Senkung der Abgastemperatur zuzuführen. Das dadurch entstehende Abgasgemisch gelangt in einen Wasserabscheider 44. In diesem Wasserabscheider 44 kann dem Gasgemisch je nach Bedarf entweder Feuchtigkeit entzogen oder zugesetzt werden. Das so behandelte Abgasgemisch wird durch die Leitung 49 einem Abgas-Anschluss 69 an dem Nachreaktor 6 als Reaktionsgas und ggf. Fluidisiergas zugeführt.

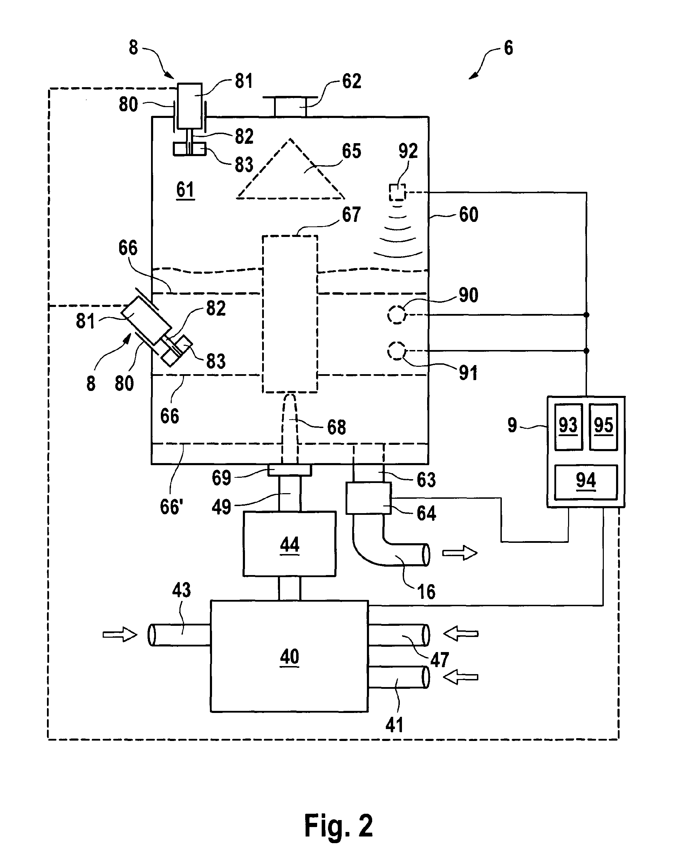

Ein Ausführungsbeispiel für den Nachreaktor 6 ist in Figur 2 näher dargestellt. Der Nachreaktor 6 ist ausgelegt für einen Durchsatz von ca. 35 m3 je Stunde. Er umfasst als Hauptkomponenten ein Gehäuse 60, welches einen Arbeitsraum 61 umschließt, und eine am oberen Ende angeordnete Zufuhreinrichtung 62, in welche die Zuleitung 15 angeschlossen ist, und eine am unteren Ende angeordnete Abfuhreinrichtung 63, welche den nun vollständig kalzinierten Gips über eine Leitung 16 abtransportiert. Die Verweilzeit im Nachreaktor kann dank der wärmepassiven Ausgestaltung an sich beliebig gewählt werden und beträgt vorzugsweise 10 bis 30 Minuten, weiter vorzugsweise 15 bis 25, weiter vorzugsweise 20 Minuten.

Im dargestellten Ausführungsbeispiel ist das Gehäuse 60 von zylinderförmiger Gestalt mit einem Durchmesser von etwa 3 Metern, wobei die Zufuhreinrichtung 62 in einer oberen Stirnwand und die Abfuhreinrichtung 63 in einer unteren Stirnwand, dem Boden, angeordnet sind. Die Höhe beträgt etwa 5 Meter. In dem Inneren des gleichfalls zylinderförmigen Arbeitsraums 61 sind mehrere Fluidisierböden 66 in horizontaler Richtung angeordnet. Die Fluidisierböden 66 umfassen im Wesentlichen einen Boden mit darunter angeordneten Hohlkammern zur Zuführung von Fluidisiergas, welches durch Öffnungen in dem Fluidisierboden 66 nach oben austreten kann, und dabei eine auf dem Fluidisierboden 66 aufliegende Schicht des zu behandelnden Guts durchströmt und fluidisiert. Am unteren Ende des Arbeitsraums 61 ist ein weiterer Fluidisierboden 66' angeordnet, der zusätzlich Durchbrechungen zum Anschluss der Abfuhreinrichtung 63 aufweist.

Im oberen Bereich des Arbeitsraums 61 befindet sich in Fallrichtung unmittelbar unterhalb der Zufuhreinrichtung 62 ein Dispersionselement 65. Es ist als ein Kegel ausgeführt. Seine Achse liegt koaxial zur Achse des zylindrischen Arbeitsraums 61, wobei die Spitze nach oben zu der Zufuhreinrichtung 62 weist. Zugeführtes Gut fällt in seiner Fallbewegung auf die konische Mantelfläche des Kegels 65, und wird dadurch dank der rotationssymmetrischen Gestaltung gleichmäßig in alle Richtungen nach radial abgelenkt.

In der Achse des zylindrischen Arbeitsraums 61 ist unterhalb des Kegels 65 ein von unten nach oben verlaufendes Steigrohr 67 vorgesehen. Es ist so angeordnet, dass es die beiden Fluidisierböden 66 durchquert. Das Steigrohr weist einen metallischen Rohrmantel auf, der einen freien Querschnitt von 60 cm aufweist. Die Länge des Steigrohrs 67 ist etwa 3 Meter, wobei sein unteres Ende etwa 50 cm über den Boden des Arbeitsraums 61 angeordnet ist. In dem Boden des Gehäuses 60 ist in der Achse und unterhalb des Steigrohrs 67 eine zentrale Düse 68 vorgesehen, der das über den Abgas-Anschluss 69 zugeführte Abgas von dem Mischer 40 zugeführt wird. Die Düse 68 richtet ihren Gasstrom in das Steigrohr 67, wodurch dort der statische Druck abfällt und sich im Arbeitsraum 61 eine Umwälzbewegung ausbildet. Das über den freien Raum zwischen der Düse 68 und in dem Steigrohr strömende Abgas reist Partikel des Guts aus der Umgebung mit, wodurch die mitgerissenen Partikel des Guts wieder in den oberen Bereich in den Arbeitsraums 61 oberhalb der Fluidisierböden 66 befördert werden. Es bildet sich damit eine Umwälzbewegung, indem das über die Fluidisierböden 66 im äußeren Bereich des Arbeitsraums 61 sich nach unten bewegende Gut mittels des Steigrohrs 67 und dem ihm zugeführten Abgasstrom wieder nach oben transportiert wird. Durch diese Umwälzbewegung kann unter Ausnutzung der Restwärme des über die Zufuhreinrichtung 62 eintretenden Guts eine Nachkalzinierung erreicht werden.

An dem Mantel des Gehäuses 60 sind etwa auf einem Drittel der Höhe umlaufend mehrere Turbomischer angeordnet, die in den Arbeitsraum 61 ragen als Homogenisatoren 8 fungieren. Weitere in den Arbeitsraum 61 ragende Turbomischer können in dem Deckel angeordnet sein. Dazu weist das Gehäuse 60 bzw. der Deckel Anschlussstutzen 80 auf, in die Motorsätze 81 der Turbomischer eingesetzt sind. Sie treiben jeweils eine in den Arbeitsraum 61 ragende Welle 82 an und versetzen sie in schnelle Drehung. Die Motorsätze 81 sind dazu ausgebildet, die Welle 82 mit variabler Drehzahl anzutreiben. An dem freien Ende der Welle 82 sind eine Mehrzahl (im dargestellten Beispiel vier) Mischflügel 83 angeordnet. Sie sind plattenartig ausgeführt. Die Welle 82 ist in ihrer Länge so bemessen, dass die Mischflügel etwa in der Mitte des Freiraums zwischen Steigrohr 67 und der Wand des Gehäuses 60 angeordnet sind.

In dem Boden des Gehäuses 60 ist die Abfuhreinrichtung 63 mit Auslassstellen angeordnet. Die Auslassstellen umfassen einen Aktuator 64 zum Schließen oder Öffnen der Auslassstelle. Der Aktuator 64 ist mit einer Steueranlage 9 verbunden.

Die Steueranlage 9 umfasst ein Temperatur-/Feuchtekontrollmodul 93 und ein Verweilzeitmodul 94. An dem Nachreaktor 6 angeordnet sind ein Temperatursensor 90, ein Feuchtesensor 91 und ein Radarhöhensensor 92, welche an die Steueranlage 9 angeschlossen sind. Die Steueranlage 9 verknüpft die gemessenen Werte und wirkt auf den Mischer 40 ein. Außerdem umfasst die Steueranlage 9 ein Homogenisiermodul 95, an welches die Homogenisatoren 8 angeschlossen sind.

Weiter reguliert die Steueranlage 9 die Zuführungen für die Fluidisierluft und die Aktuatoren 64 für die Abfuhr des Guts.

Das Temperatur- und Feuchtemodul 93 ist dazu ausgebildet, über den Temperatursensor 90 und den Feuchtesensor 91 die Temperatur und Feuchte im Nachreaktor 6 zu bestimmen. Zur Temperaturerhöhung wird Systemabgas 4 zugeführt und zur Temperatursenkung Umgebungsluft. Soll dabei die Feuchtigkeit erhöht werden, wird feuchtes Abgas aus der Kalziniermühle 3 zugesteuert bzw. es wird auf das trockenere Abgas von anderen Prozessstufen, insbesondere des Kühlers 7 zurückgegriffen. Damit wird erreicht, dass der von der Kalziniermühle 3 kommende Gips unter Nutzung seiner eigenen Wärme und der des zugeführten Abgases kontrolliert nachkalziniert wird. Von der Kalziniermühle 3 nur teilweise kalzinierter Gips wird nachkalziniert, das heißt die Umwandlung Dihydrat zu Halbhydrat wird vervollständigt, und eventuell vorhandenes Anhydrit (AIII) wird zu Halbhydrat.

Gleichzeitig steuert das Homogenisiermodul 95 über die Turbomischer den Zerkleinerungsgrad der Partikel in dem Arbeitsraum 61. Dazu kann das Homogenisiermodul ein Taktsteuergerät umfassen, welches die Turbomischer zeitweise an- und abschaltet. Damit kann die gewünschte Feinheit des Produkts eingestellt werden. Vorzugsweise erfolgt die Betätigung der Turbomischer so lange, bis sich ein gewünschter Blaine-Wert erreicht ist. Dies kann durch Messung oder durch Zeitablauf anhand von Erfahrungswerten bestimmt werden.

Mittels des Radarhöhensensors 92 steuert die Steueranlage 9 die Abfuhreinrichtung 63 so an, dass der Füllstand und die Verweildauer des Guts in dem Nachreaktor 6 geregelt wird.

Damit kann eine Vergleichmäßigung und Verbesserung der Qualität des kalzinierten Gipses erreicht werden. Zum einen ergibt sich eine Vergleichmäßigung durch Ausgleich kurzzeitiger Schwankungen dank der durch den Aufenthalt im Arbeitsraum 61 erreichten Pufferung. Weiter ergibt sich durch die Homogenisierung eine günstigere Kristallstruktur, und es wird eine Absenkung des Wassergipswerts auf Werte wie bei der Verarbeitung von Natur-Gips und eine Erhöhung der Biegesteifigkeit erreicht. Beispielsweise kann bei feuchtem Phosphorgips ein Wassergipswert von 0,7 und eine Biegefestigkeit von 3 N/mm2 erreicht werden, gegenüber einem Wassergipswert von 1,3 und eine Biegefestigkeit von nur 1 N/mm2 ohne die erfindungsgemäße Homogenisierung.

Der in Figur 2 dargestellte Nachreaktor 6 kann auch als Nachrüstreaktor zum Einbau in bestehende Kalzinieranlagen fungieren.

**Patentansprüche**

1.  Verfahren zum Kalzinieren von Phosphorgips oder anderen feuchten synthetischen Gipsen als zu verarbeitendes Gut, umfassend

    a) ein Zuführen des Guts,
    b) Kalzinieren des Guts in einer Kalziniermühle (3) und
    c) Nachkalzinieren des heißen Guts in einem Nachreaktor (6),

    **dadurch gekennzeichnet, dass**
    ein Homogenisieren des Guts in dem Nachreaktor (6) erfolgt.

2.  Verfahren nach Anspruch 1,
    **dadurch gekennzeichnet, dass**
    dem Nachreaktor (6) außer Systemabgas keine Fremdenergiezufuhr zugeführt wird.

3.  Verfahren nach Anspruch 1 oder 2,
    **dadurch gekennzeichnet, dass**
    das Homogenisieren getaktet durchgeführt wird.

4.  Verfahren nach Anspruch 1, 2 oder 3
    **dadurch gekennzeichnet, dass**
    zum Homogenisieren Turbomischer verwendet werden.

5.  Verfahren nach einem der Ansprüche 1 bis 4,
    **dadurch gekennzeichnet, dass**
    das Homogenisieren in der Weise erfolgt, dass ein Blaine-Wert des Guts verdoppelt wird.

6.  Verfahren nach Anspruch 5,
    **dadurch gekennzeichnet, dass**
    der Blaine-Wert auf einen Wert von mindestens 6000

    $$\frac{cm^2}{g} \text{ , vorzugsweise 7000 } \frac{cm^2}{g} \text{ durch das Ho-}$$

    mogenisieren erhöht wird.

7.  Verfahren nach einem der Ansprüche 1 bis 6,
    **dadurch gekennzeichnet, dass**
    das Abgas dem Nachreaktor (6) mit einer Temperatur von mindestens 150°C zugeführt wird.

8.  Kalzinieranlage, die zum Verarbeiten von Phosphorgips oder anderen feuchten synthetischen Gipsen ausgebildet ist, umfassend eine Kalziniermühle (3) und einen in Prozesslaufrichtung dahinter liegenden gesonderten Nachreaktor (6),
    **dadurch gekennzeichnet, dass**
    der Nachreaktor (6) eine Homogenisiereinrichtung für den Gips aufweist.

9.  Kalzinieranlage nach Anspruch 8,
    **dadurch gekennzeichnet, dass**
    an dem wärmepassiv ausgeführten Nachreaktor (6) Anschlüsse zur Speisung mit Systemabgas (4) vorgesehen sind.

10. Kalzinieranlage nach Anspruch 8 oder 9,
    **dadurch gekennzeichnet, dass**
    eine Steuereinrichtung vorgesehen ist, welche die Homogenisiereinrichtung getaktet betreibt.

11. Kalzinieranlage nach Anspruch 8, 9 oder 10,
    **dadurch gekennzeichnet, dass**
    die Homogenisiereinrichtung Turbomischer aufweist.

12. Kalzinieranlage nach einem der Ansprüche 8 bis 11,
    **dadurch gekennzeichnet, dass**
    ein Zeitglied vorgesehen ist, welche die Abfuhr aus dem Nachreaktor (6) so steuert, dass eine Verweilzeit entsteht, die zur Verdoppelung des Blaine-Werts führt.

13. Kalzinieranlage nach einem der Ansprüche 8 bis 12,
    **dadurch gekennzeichnet, dass** das Abgas dem Nachreaktor (6') mit einer Temperatur von mindestens 150°C zugeführt wird.

14. Kalzinieranlage nach einem der Ansprüche 8 bis 13,
    **dadurch gekennzeichnet, dass**
    eine Steueranlage (9) zur Regelung der Temperatur, des Wassergehalts, der Verweildauer und/oder der Füllhöhe im Nachreaktor (6) vorgesehen ist.

15. Nachrüstreaktor für Kalzinieranlagen zum Verarbeiten von Phosphorgips oder anderen feuchten synthetischen Gipsen mit einer Zufuhreinrichtung (62) für zumindest teilkalziniertes heißes Gut, einem Reaktionsraum (61) und einer Abfuhreinrichtung (63) für das vollkalzinierte Gut,
**dadurch gekennzeichnet, dass**
der Nachrüstreaktor (6) eine Homogenisiereinrichtung für das Gut aufweist.

16. Nachrüstreaktor nach Anspruch 15,
**dadurch gekennzeichnet, dass**
der Nachrüstreaktor (6) nach einem der Ansprüche 9 bis 14 weitergebildet ist.

Fig. 1

**Fig. 2**

Europäisches
Patentamt

European
Patent Office

Office européen
des brevets

# EUROPÄISCHER RECHERCHENBERICHT

**Nummer der Anmeldung**

EP 08 00 8733

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 181 985 A (GATES WILLIAM H ET AL) 4. Mai 1965 (1965-05-04) * Spalte 1, Zeile 54 - Spalte 6, Zeile 51 * | 1-16 | INV. C04B11/26 |
| X | DE 21 60 204 A1 (KNAUF WESTDEUTSCHE GIPS) 14. Juni 1973 (1973-06-14) * Seiten 6-11 * | 1-16 | |
| X | EP 1 747 814 A (CLAUDIUS PETERS TECHNOLOGIES G [DE]) 31. Januar 2007 (2007-01-31) * das ganze Dokument * | 15,16 | |
| A | | 1-14 | |
| X | GB 2 299 522 A (RODRIGUEZ BARRUFET MARIA ELENA [ES]) 9. Oktober 1996 (1996-10-09) * Zusammenfassung * * Anspruch 1 * | 15,16 | |
| X | EP 0 947 540 A (GEOLINE SRL [IT]) 6. Oktober 1999 (1999-10-06) * Absätze [0053] - [0055] * | 15,16 | RECHERCHIERTE SACHGEBIETE (IPC) C04B |
| X | WO 89/10185 A (ENERGIAGAZDALKODASI INTEZET [HU]) 2. November 1989 (1989-11-02) * Zusammenfassung * * Abbildung 2 * | 15,16 | |
| A | US 2007/215020 A1 (MILLER DALE E [US]) 20. September 2007 (2007-09-20) * das ganze Dokument * | 1-16 | |
| A | DE 35 37 049 A1 (KRUPP POLYSIUS AG [DE]) 23. April 1987 (1987-04-23) * das ganze Dokument * | | |

Der vorliegende Recherchenbericht wurde für alle Patentansprüche erstellt

| Recherchenort | Abschlußdatum der Recherche | Prüfer |
|---|---|---|
| München | 7. Oktober 2008 | Gattinger, Irene |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
     Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 00 8733

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-10-2008

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 3181985 | A | 04-05-1965 | BE | 607351 | A1 | 21-02-1962 |
| | | | GB | 992951 | A | 26-05-1965 |
| DE 2160204 | A1 | 14-06-1973 | BE | 791946 | A1 | 16-03-1973 |
| | | | FR | 2161928 | A1 | 13-07-1973 |
| | | | GB | 1387707 | A | 19-03-1975 |
| | | | IT | 970646 | B | 20-04-1974 |
| | | | NL | 7215569 | A | 06-06-1973 |
| | | | PL | 79854 | B1 | 30-08-1975 |
| | | | ZA | 7208460 | A | 29-08-1973 |
| EP 1747814 | A | 31-01-2007 | AU | 2006274185 | A1 | 01-02-2007 |
| | | | CA | 2616463 | A1 | 01-02-2007 |
| | | | WO | 2007012452 | A1 | 01-02-2007 |
| GB 2299522 | A | 09-10-1996 | KEINE | | | |
| EP 0947540 | A | 06-10-1999 | DE | 69926938 | D1 | 06-10-2005 |
| | | | DE | 69926938 | T2 | 14-06-2006 |
| | | | IT | MI980701 | A1 | 01-10-1999 |
| | | | US | 6369131 | B1 | 09-04-2002 |
| WO 8910185 | A | 02-11-1989 | DE | 58905377 | D1 | 30-09-1993 |
| | | | EP | 0365652 | A1 | 02-05-1990 |
| | | | HU | 201258 | B | 28-10-1990 |
| | | | US | 5176447 | A | 05-01-1993 |
| US 2007215020 | A1 | 20-09-2007 | KEINE | | | |
| DE 3537049 | A1 | 23-04-1987 | ES | 2002039 | A6 | 01-07-1988 |
| | | | FR | 2588854 | A1 | 24-04-1987 |

EPO FORM P0461

Für nähere Einzelheiten zu diesem Anhang : siehe Amtsblatt des Europäischen Patentamts, Nr.12/82